# EUROPÄISCHE PATENTSCHRIFT

(11) **EP 1 199 950 B1**
(45) Veröffentlichungstag und Bekanntmachung des Hinweises auf die Patenterteilung: **26.10.2005**
(21) Anmeldenummer: 00951427.4
(22) Anmeldetag: 21.07.2000
(51) Int. Cl.: A23L 1/30, A23L 1/305

(54) **VERFAHREN ZUR HERSTELLUNG VON LEBENSMITTELN, DIÄTETISCHEN LEBENSMITTELN UND LEBENSMITTELZUSÄTZEN AUF BASIS VON GETREIDESCHLEMPE**
METHOD FOR PRODUCING FOODSTUFFS, DIETETIC FOODSTUFFS AND FOOD ADDITIVES ON THE BASIS OF GRAIN STILLAGE
PROCEDE DE PREPARATION DE PRODUITS ALIMENTAIRES, DE PRODUITS ALIMENTAIRES DIETETIQUES ET D'ADDITIFS ALIMENTAIRES A BASE DE DRECHE DE CEREALES

(30) Priorität: 05.08.1999 DE 19936957
(43) Veröffentlichungstag der Anmeldung: 02.05.2002
(73) Patentinhaber: Tölle, Marc, 40489 Düsseldorf (DE)
(72) Erfinder: Tölle, Marc, 40489 Düsseldorf (DE)
(74) Vertreter: Werner, Hans-Karsten
(86) Internationale Anmeldenummer: PCT/EP2000/007035
(87) Internationale Veröffentlichungsnummer: WO 2001/010245

(56) Entgegenhaltungen:
- WO-A-89/01025
- DE-A- 3 904 962
- GB-A- 2 066 038

## Beschreibung

Gegenstand der vorliegenden Erfindung ist ein Verfahren zur Herstellung von Lebensmitteln, diätetischen Lebensmitteln und Lebensmittelzusätzen auf Basis von Getreideschlempe, bei welchem die Getreideschlempe direkt aus dem Brennkessel entnommen, eingedickt aber nicht getrocknet mit Milch und einer Joghurtkultur versetzt wird. Ein derartiges Verfahren ist bekannt aus der DE-C-39 04 962. Dieses Verfahren hat sich bewährt, jedoch kam es immer wieder zu Qualitätsschwankungen und damit zu Produkten, die geschmacklich und geruchlich nicht optimal waren. Die Erfindung hat sich somit die Aufgabe gestellt, das Verfahren gemäß DE 39 04 962 C2 weiter zu verbessern und zu optimieren und dass dabei erhaltene Produkt zu den verschiedensten Endprodukten weiterverarbeiten zu können.

Diese Aufgabe wurde jetzt dadurch gelöst, dass
a) Getreideschlempe bei einem Druck von 100 bis 800 mbar, vorzugsweise ca. 700 mbar, auf ca. 15 bis 19% TM, vorzugsweise 16 bis 18% TM eingedickt wird,
b) mit einer bereits mit der Joghurtkultur oder einer Buttereikultur angeimpften Milch vermischt,
c) dieses Gemisch entweder mit Joghurt-Kultur bei einer Temperatur von 38 bis 48°C , vorzugsweise 40 bis 44°C 10 bis 15 Stunden, vorzugsweise 12 bis 15 Stunden fermentiert wird oder dieses Gemisch mit einer Butterei-Kultur bei einer Temperatur von 18° - 24°C, vorzugsweise 20° - 22°C bis 36 Stunden, vorzugsweise 26 - 30 Stunden fermentiert wird und danach
d) mit weiterer Milch oder Milchkonzentrat vermischt auf Temperaturen unter 15°C gekühlt wird.

Von entscheidender Bedeutung für das Verfahren ist zunächst das Eindicken unter vermindertem Druck in dem genannten Druckbereich, da es bei Drucken über 800 mbar sehr leicht zu Anbackungen kommt und Drucke von weniger als 100 mbar mit unverhältnismäßig hohen Produktionskosten verbunden sind. Wichtig ist dann weiterhin der geforderte Bereich von 15 bis 19, vorzugsweise 16 bis 18% TM, da derartige Produkte sehr gut und wirtschaftlich weiterverarbeitbar sind und von allen störenden Geruchsstoffen befreit sind. So hat sich im Rahmen der Erforschung der erforderlichen Dosierungsmenge herausgestellt, dass jede verzehrsfertige Portion 21 - 25 Gramm Trockenmasseanteil der Gemische mit Joghurt- oder Buttereikulturen enthalten sollte, vorzugsweise 22 - 23 Gramm. Das entspricht etwa 135 Gramm der eingedickten Masse mit 17% TM. Diese Masse mit weiteren Zutaten zusammengeführt, ergibt wohlschmeckende, verzehrsfertige zubereitete Verkaufs-Einheiten und Verzehrs-Portionen von 200 - 250 Gramm.

Für diese verzehrsfertigen Erzeugnisse eignen sich insbesonders:
Milchzubereitungen
Fruchtzubereitungen
Gemüsezubereitungen.

Weiterhin hat es sich bewährt, die eingedickte Getreideschlempe nicht erst mit Milch und dann mit einer Joghurtkultur oder Buttereikultur zu vermischen, sondern mit einer bereits mit der Joghurtkultur oder Buttereikultur angeimpften Milch. Diese Gemische werden bei den oben genannten Bedingungen fermentiert, wobei darauf geachtet werden sollte, dass die Fermentation durch Abkühlung spätestens dann unterbrochen wird, wenn der pH-Wert auf 4,7, vorzugsweise 4,9 abgesunken ist. Buttereikulturen von Milchsäurebakterien können dem Endprodukt einen milderen Geschmack verleihen.

Diese Fermentation mit einer Joghurt-Kultur oder Butterei-Kultur der zuvor mit Hefe fermentierten Getreideschlempe ist in der Lage zuverlässig und zu einem hohen Grade wirksam, die letzten störenden Geschmacksstoffe abzubauen. Darüber hinaus hat sich gezeigt, dass auch noch Reste von Zuckern und Kohlenhydraten bei dieser Fermentation zu Milchsäure verstoffwechselt werden, so dass das Produkt noch weniger Zucker und Kohlenhydrate enthält, so dass es für Diabetiker noch geeigneter ist, darüber hinaus eine bessere Lagerstabilität erhält.

Nach Beendigung dieser Fermentation wird das Produkt mit weiterer Milch oder mit Milchkonzentrat vermischt und auf Temperaturen von unter 15°C gekühlt. Hierdurch kommt die Fermentation völlig zum Stehen und es kommt nicht zu einem weiteren Absinken des pH-Wertes, was geschmacklich nicht akzeptabel ist.

Das so erhaltene Produkt wird vorzugsweise sprühgetrocknet, wodurch es praktisch unbeschränkt lagerfähig wird. Durch die Sprühtrocknung verliert die Joghurtkultur ihre Lebensfähigkeit, so dass auch bei späterer Anfeuchtung die Fermentation nicht wieder einsetzen kann.

Darüber hinaus kann dieses gekühlte Produkt auch gelagert und transportiert werden und direkt zu Fertiggerichten weiterverarbeitet werden, sofern hierin die Joghurtkultur oder Buttereikultur akzeptabel ist. Es ist sogar möglich, dieses Produkt dann mit weiteren fermentierbaren Zusätzen zu versehen, die dann die Eigenschaften des Endproduktes beeinflussen. Es wurde herausgefunden, dass Honig, Lecithine und/oder Sojaeiweiß mit Getreideschlempe Komplexverbindungen eingehen. Durch chemisch-physikalische Wechselwirkungen zwischen den Lecithinen, dem Eiweiß und den einzelnen Stoffgruppen der Getreideschlempe (z.B. Restkohlenhydrate, Fette) entstehen Mehrstoffsysteme. Diese unterscheiden sich im chemischen, physikalischen und biologischen Verhalten erheblich von ihren Einzelkomponenten, darauf beruht ihre vielseitige Wirkung.

Sowohl das sprühgetrocknete Produkt als auch das noch nicht sprühgetrocknete Produkt kann gewünschtenfalls mit Mineralstoffen, Vitaminen, Geschmacksstoffen, Aromastoffen und Farbstoffen versehen werden und somit zu Produkten sehr unterschiedlicher Geschmacksrichtungen variiert werden. All diesen Produkten ist jedoch gemeinsam, dass sie geschmacklich und geruchlich nicht mehr an Getreideschlempe erinnern und daher vom breiten Verbraucherkreisen akzeptiert werden. Beliebte Zusätze sind Frucht-, Gemüse- und/oder Milchzubereitungen mit Süßstoff oder Fructose, insbesondere wenn die Produkte für Diabetiker oder zur Gewichtsreduzierung geeignet bleiben sollen.

Weiterhin ist es möglich, auf das fertige Produkt Honig oder wässrige Lösungen von Honig aufzusprühen, wobei Temperaturen über 60°C vermieden werden sollten und darauf geachtet werden sollte, dass keine Klumpen oder Zusammenbackungen entstehen. Honig verbessert nicht nur den Geschmack, sondern erhöht auch den Gehalt an Spurenelementen, Vitaminen, Enzymen, gewissen Aminosäuren und leicht verdaulichen Nährstoffen, so dass derartige Produkte auch als Ergänzungsnahrung während Abmagerungskuren, während der Rekonvaleszenz nach Operationen oder Krankheiten usw. eingesetzt werden können. Weiterhin sind die Produkte geeignet als diätetische Nahrungsmittel zur Behandlung von Aminosäuremangelerkrankungen, Bauchspeicheldrüsenfunktionsstörungen, Kohlenhydratsuchterkrankungen und Darmfunktionsstörungen. Die Menge an Honig liegt vorzugsweise bei ca. 5 Gew% bezogen auf die eingedickte Getreideschlempe. Anstelle von Honig kann auch bis zu 15 Gew% Dattelpaste verwendet werden, die für Diabetiker besser geeignet ist.

Selbstverständlich kann gewünschtenfalls auch gemäß DE 39 04 962 Getreideschlempe nach der Entnahme aus dem Brennkessel durch Vermahlen in einer Kugelmühle oder Ultraschall aufgeschlossen werden. Besser geeignet ist aber eine Zerkleinerung und Homogenisierung in einem Hochdruckhomogenisator. Dies erfolgt vorzugsweise mit der frischen, noch heißen Schlempe aus der Destillationsanlage und vor dem Eindicken unter Druck. Die Homogenisierung kann beispielsweise bei einem Druck von 800 - 1000 bar erfolgen oder durch mehrfache Homogenisierung bei 300 bis 400 bar. Geeignete Geräte werden beispielsweise von der Firma Niro Soavi in Lübeck gebaut und zur Verfügung gestellt. Die Homogenisierung erfolgt vorzugsweise bei Temperaturen um 90°C.

Schließlich hat sich gezeigt, dass die so hergestellten, verbesserten Produkte insbesondere zusammen mit weiteren Zusätzen, als Nahrungsergänzungstoffe eingesetzt werden können, wobei die Produkte selbst bereits durch ihren hohen Gehalt an Ballaststoffen, Mineralstoffen, Vitaminen und den Eiweißstoffen der Hefe und der Milch wertvolle Komponenten von Nahrungsergänzungsstoffen enthalten.

Die Konsistenz der Produkte kann eingestellt werden durch Zusätze wie Xanthan, Guarkernmehl und modifizierte Stärke. Sofern die Erhitzungszeiten kurz genug gehalten werden, so dass die Inhaltsstoffe und Wirkstoffe nicht geschädigt oder zerstört werden, kann sogar das Produkt zusammen mit geringen Mengen Stärke einer Kochextrusion unterworfen werden, wobei beispielsweise Snacks oder Flocken entstehen, die vom Verbraucher besser akzeptiert werden als Einrührpulvermischungen. Es ist auch möglich, die Pulver zu Kautabletten zu verpressen, wobei sicherlich keine Schädigung der Inhaltsstoffe und Wirkstoffe eintritt.

## Patentansprüche

1. Verfahren zur Herstellung von Lebensmitteln, diätetischen Lebensmitteln und Lebensmittelzusätzen auf Basis von Getreideschlempe, bei welchen die Getreideschlempe direkt aus dem Brennkessel entnommen, eingedickt aber nicht getrocknet, mit Milch und einer Joghurt- oder Buttereikultur fermentiert wird, **dadurch gekennzeichnet, dass**
a) die Getreideschlempe bei einem Druck von 100 bis 800 mbar auf ca. 15 bis 17% TM eingedickt wird, dann
b) mit einem bereits mit der Joghurtkultur oder Buttereikultur angeimpften Milch vermischt,
c) dieses Gemisch entweder mit Joghurt-Kultur bei einer Temperatur von 38 bis 48°C 10 bis 20 Stunden fermentiert wird oder dieses Gemisch mit einer Butterei-Kultur bei einer Temperatur von 18° - 24°C bis zu 36 Stunden fermentiert wird und danach
d) mit weiterer Milch oder Milchkonzentrat vermischt auf Temperaturen unter 15°C gekühlt wird.

2. Verfahren gemäß Anspruch 1, **dadurch gekennzeichnet, dass** in der Stufe a) bei einem Druck von ca. 700 mbar auf 16 bis 18% TM eingedickt wird.

3. Verfahren gemäß Anspruch 1 oder 2, **dadurch gekennzeichnet, dass** in der Stufe c) die Joghurtkultur bei 40 bis 44°C 12 bis 15 Stunden oder die Buttereikultur bei 20 bis 22°C 20 bis 30 Stunden fermentiert wird.

4. Verfahren gemäß einem der Ansprüche 1 bis 3, **dadurch gekennzeichnet, dass** die Fermentation durch Abkühlung spätestens dann unterbrochen wird, wenn der pH-Wert auf 4,7 abgesunken ist.

5. Verfahren gemäß einem der Ansprüche 1 bis 4, **dadurch gekennzeichnet, dass** das Produkt anschließend sprühgetrocknet wird.

6. Verfahren gemäß einem der Ansprüche 1 bis 5, **dadurch gekennzeichnet, dass** das Produkt mit Honig, wässrigen Lösungen von Honig oder Dattelpaste besprüht wird.

7. Verfahren gemäß einem der Ansprüche 1 bis 6, **dadurch gekennzeichnet, dass** das Produkt ohne Sprühtrocknung gekühlt, gelagert und transportiert zu Fertiggerichten weiterverarbeitet wird.

8. Verfahren gemäß einem der Ansprüche 1 bis 7, **dadurch gekennzeichnet, dass** die heiße Schlempe vor dem Eindicken in einem Hochdruckhomogenisator zerkleinert wird.

9. Verwendung des Produktes hergestellt gemäß einem der Ansprüche 1 bis 8 zur Herstellung von Nahrungsergänzungsmitteln.

10. Verwendung des Produktes hergestellt gemäß einem der Ansprüche 1 bis 8 zur Herstellung von Tabletten, Snacks, Flocken oder Extrudaten.

11. Verwendung des Produktes hergestellt gemäß einem der Ansprüche 1 bis 8 zur Herstellung von
- trinkfertigen Erzeugnissen
- löffelfertigen Joghurt-Zubereitungen
- Iöffelfertigen Vollwert-Dessertspeisen
- einrührfertigen Müsli-Zubereitungen
- einrührfertigen Trockenprodukten zur Herstellung von Diät-Portionen und Mahlzeiten sowie zur Herstellung von sogenannten Aufschlagprodukten (Vollwert-Dessertspeisen).

## Claims

1. A process for producing foods, dietetic foods and food additives based on distillers' grains in which the distillers' grains are directly taken from the distilling kettle, thickened, but not dried, and fermented with milk and a yoghurt or butter culture, **characterized in that**
a) the distillers' grains are thickened under a pressure of from 100 to 800 mbar to about from 15 to 17% dry matter; then
b) mixed with milk which has already been inoculated with the yoghurt culture or butter culture;
c) either the mixture obtained is fermented with a yoghurt culture at a temperature of from 38 to 48 °C for 10 to 20 hours, or the mixture obtained is fermented with a butter culture at a temperature of from 18 to 24 °C for up to 36 hours; followed by
d) mixing with additional milk or milk concentrate and cooling to temperatures of below 15 °C.

2. The process according to claim 1, **characterized in that** the thickening in step a) is effected at a pressure of about 700 mbar and taken to from 16 to 18% dry matter.

3. The process according to claim 1 or 2, **characterized in that** fermentation in step c) is at 40 to 44 °C for 12 to 15 hours for a yoghurt culture; or at 20 to 22 °C for 20 to 30 hours for a butter culture.

4. The process according to any of claims 1 to 3, **characterized in that** the fermentation is stopped by cooling, at the latest, when the pH value has dropped to 4.7.

5. The process according to any of claims 1 to 4, **characterized in that** the product is subsequently spray-dried.

6. The process according to any of claims 1 to 5, **characterized in that** the product is sprayed with honey, aqueous solutions of honey or date paste.

7. The process according to any of claims 1 to 6, **characterized in that** the product is cooled, stored and shipped without spray-drying and processed further into instant meals.

8. The process according to any of claims 1 to 7, **characterized in that** the hot distillers' grains are comminuted in a high-pressure homogenizer prior to being thickened.

9. Use of the product prepared according to any of claims 1 to 8 for the preparation of food supplements.

10. Use of the product prepared according to any of claims 1 to 8 for the preparation of tablets, snacks, flakes or extrudates.

11. Use of the product prepared according to any of claims 1 to 8 for the preparation of
- ready-to-drink products;
- spoon-ready yoghurt preparations;
- spoon-ready whole food dessert meals;
- ready-to-mix muesli preparations;
- ready-to-mix dry products for preparing diet portions and meals and for preparing so-called value-added products (whole food desserts).

## Revendications

1. Procédé de préparation de produits alimentaires, de produits alimentaires diététiques et d'additifs alimentaires à base de drêches de céréales, pour lesquels les drêches de céréales sont directement retirées de la chambre à combustion, épaissies mais pas séchées, fermentées avec du lait et une culture de yoghourt ou une culture de beurrerie, **caractérisé en ce que** :
a) les drêches de céréales sont épaissies à une pression de 100 à 800 mbars à environ 15 à 17 % de MS, puis
b) mélangées à un lait auquel on a déjà inoculé la culture de yoghourt ou la culture de beurrerie,
c) ce mélange est fermenté soit avec une culture de yoghourt à une température de 38 à 48 °C pendant 10 à 20 heures, soit avec une culture de beurrerie à une température de 18 °C à 24 °C jusqu'à 36 heures et ensuite,
d) il est de nouveau mélangé à du lait ou du lait concentré et refroidi à des températures inférieures à 15 °C.

2. Procédé selon la revendication 1, **caractérisé en ce qu'**à l'étape a) on épaissit à 16 à 18 % de MS à une pression d'environ 700 mbars.

3. Procédé selon la revendication 1 ou 2, **caractérisé en ce qu'**à l'étape c) la culture de yoghourt est fermentée à 40-44 °C pendant 12 à 15 heures ou la culture de beurrerie est fermentée de 20 à 22 °C pendant 20 à 30 heures.

4. Procédé selon l'une des revendications 1 à 3, **caractérisé en ce que** la fermentation est alors interrompue par refroidissement au plus tard lorsque la valeur de pH est descendue à 4,7.

5. Procédé selon l'une des revendications 1 à 4, **caractérisé en ce que** le produit est ensuite séché par pulvérisation.

6. Procédé selon l'une des revendications 1 à 5, **caractérisé en ce qu'**on asperge le produit de miel, de solutions aqueuses de miel ou de pâte de dattes.

7. Procédé selon l'une des revendications 1 à 6, **caractérisé en ce que** le produit refroidi sans séchage par pulvérisation, entreposé et transporté est transformé en plats cuisinés.

8. Procédé selon l'une des revendications 1 à 7, **caractérisé en ce que** les drêches brûlantes sont broyées dans un homogénéisateur haute pression avant épaississement.

9. Utilisation du produit préparé selon l'une des revendications 1 à 8 pour la préparation de compléments alimentaires.

10. Utilisation du produit préparé selon l'une des revendications 1 à 8 pour la préparation de tablettes, de snacks, de flocons ou d'extrudats.

11. Utilisation du produit préparé selon l'une des revendications 1 à 8 pour la préparation de :
- produits prêts à boire
- préparations à base de yoghourt prêtes à consommer
- desserts complets prêts à consommer
- préparations à base de müesli prêtes à délayer
- produits secs prêts à délayer pour la préparation de rations et de plats de régime ainsi que pour la préparation de ce que l'on appelle des produits de complément (desserts complets).
